# EUROPEAN PATENT APPLICATION

(11) **EP 4 425 840 A1**
(43) Date of publication of application: **04.09.2024**
(21) Application number: 22962979.5
(22) Date of filing: 24.10.2022
(51) Int. Cl.: H04L 12/00

(54) **NODE PROTECTION METHOD AND APPARATUS, ELECTRICAL DEVICE, AND MEDIUM**

(71) Applicant: New H3C Technologies Co., Ltd., Hangzhou, Zhejiang 310052 (CN)
(72) Inventor: QIU, Yuanxiang, Beijing 100102 (CN); LIN, Changwang, Beijing 100102 (CN)
(74) Representative: Zimmermann & Partner Patentanwälte mbB
(86) International application number: PCT/CN2022/127132
(87) International publication number: WO 2024/086991

(57) **Abstract**

The disclosure provides a node protection method, device, electronic equipment and media, relating to the technical field of communication. The method includes: acquiring a first service message sent, wherein the first service message includes an IPv6 header and an SRH, the IPv6 header includes a destination address, the SRH includes an SID list, and the SID list includes a backup SID and SIDs of end nodes of a primary path for forwarding the first service message; forwarding a second service message to an end node indicated by the backup SID, wherein the second service message includes the destination address that is the backup SID, and the destination address is modified after determining that each of the end nodes on the primary path is an unreachable end node and the end node indicated by the backup SID is a reachable end node. The service delay when a link or node fails can be reduced.

## Description

### TECHNICAL FIELD

The disclosure relates to the technical field of communication, and in particular to a node protection method, device, electronic equipment and medium.

### BACKGROUND

Interactive multimedia service applications, such as Voice over Internet Protocol (VoIP), are very sensitive to network packet loss, and can only tolerate network packet loss of tens of milliseconds. However, when a link or node in a network fails, it usually takes hundreds of milliseconds or even several seconds to resume service transmission, which cannot meet service requirements.

### SUMMARY

In view of this, the disclosure provides a node protection method, device, electronic equipment and medium for reducing a service delay when a link or node fails. The specific technical solution is as follows.

In a first aspect, the disclosure provides a node protection method, which is applied to a first node, the method including:
acquiring a first service message sent by a second node, wherein the first service message includes an IPv6 header and an SRH, the IPv6 header includes a destination address, the SRH includes an SID list, and the SID list includes a backup SID and SIDs of end nodes of a primary path for forwarding the first service message;
forwarding a second service message to an end node indicated by the backup SID, wherein the second service message includes the destination address that is the backup SID, and the destination address is modified after determining that each of the end nodes on the primary path is an unreachable end node and the end node indicated by the backup SID is a reachable end node.

In a possible implementation, the SRH further includes an SL; after acquiring the first service message, the method further includes:
obtaining a first SL according to a difference between a current SL and a fixed value, and acquiring a first SID corresponding to the first SL from the SID list;
if an end node indicated by the first SID is unreachable, taking the first SL as the current SL, and repeating a process of obtaining a first SL according to a difference between a current SL and a fixed value and acquiring a first SID corresponding to the first SL from the SID list until a first SID of a reachable end node is acquired from the SID list;
if the first SID of the reachable end node is the backup SID, modifying the destination address to the backup SID to obtain the second service message;
if the first SID of the reachable end node is not the backup SID, modifying the destination address to the first SID of the reachable end node to obtain a third service message, and forwarding the third service message to the end node indicated by the first SID.

In a possible implementation, after acquiring the first service message, the method further includes:
if the destination address is an SID configured with a specified additional behavior, deleting the IPv6 header and the SRH to obtain a fourth service message;
forwarding the fourth service message.

In a possible implementation, the end node indicated by the backup SID is a tail node on a backup path for forwarding the first service message; or
the end node indicated by the backup SID is a second node, and there is a BE path between the first node and the second node.

In a possible implementation, an SID encapsulated in a penultimate element in the SID list is an SID of a tail node on the primary path, and an SID encapsulated in a last element is the backup SID.

In a possible implementation, when the first node is a source node, acquiring the first service message includes:
receiving a fifth service message;
if a next hop of a routing table entry matched with the fifth service message is an SRv6 strategy and the SRv6 strategy includes the primary path and the backup path, encapsulating the IPv6 header and the SRH in an outer layer of the fifth service message to obtain the first service message.

In the second aspect, the disclosure provides a node protection device, which is applied to a first node, the device including:
an acquisition module to acquire a first service message, wherein the first service message includes an IPv6 header and an SRH, the IPv6 header includes a destination address, the SRH includes an SID list, and the SID list includes a backup SID and SIDs of end nodes of a primary path for forwarding the first service message;
a transmission module to forward a second service message to an end node indicated by the backup SID, wherein the second service message includes the destination address that is the backup SID, and the destination address is modified after determining that each of the end nodes on the primary path is an unreachable end node and the end node indicated by the backup SID is a reachable end node.

In a possible implementation, the SRH further includes an SL, and the device further includes a modification module;
the acquisition module is further to obtain a first SL according to a difference between a current SL and a fixed value, and acquire a first SID corresponding to the first SL from the SID list; if an end node indicated by the first SID is unreachable, take the first SL as the current SL, and repeat a process of obtaining a first SL according to a difference between a current SL and a fixed value and acquiring a first SID corresponding to the first SL from the SID list until a first SID of a reachable end node is acquired from the SID list;
the modification module is to modify, if the first SID of the reachable end node is the backup SID, the destination address to the backup SID to obtain the second service message;
the modification module is further to modify, if the first SID of the reachable end node is not the backup SID, the destination address to the first SID of the reachable end node to obtain a third service message;
the transmission module is further to forward the third service message to the end node indicated by the first SID.

In a possible implementation, the device further includes:
a deletion module to delete, if the destination address is an SID configured with a specified additional behavior, the IPv6 header and the SRH to obtain a fourth service message;
wherein the transmission module is further to forward the fourth service message.

In a possible implementation, the end node indicated by the backup SID is a tail node on a backup path for forwarding the first service message; or
the end node indicated by the backup SID is a second node, and there is a BE path between the first node and the second node.

In a possible implementation, an SID encapsulated in a penultimate element in the SID list is an SID of a tail node on the primary path, and an SID encapsulated in a last element is the backup SID.

In a possible implementation, when the first node is a source node, the acquisition module is specifically to:
receive a fifth service message;
if a next hop of a routing table entry matched with the fifth service message is an SRv6 strategy and the SRv6 strategy includes the primary path and the backup path, encapsulate the IPv6 header and the SRH in an outer layer of the fifth service message to obtain the first service message.

In a third aspect, the disclosure provides an electronic equipment, including:
a processor;
a transceiver;
a machine-readable storage medium which stores machine-executable instructions that can be executed by the processor, the machine executable instructions cause the processor to:
   acquire a first service message, wherein the first service message includes an IPv6 header and an SRH, the IPv6 header includes a destination address, the SRH includes an SID list, and the SID list includes a backup SID and SIDs of end nodes of a primary path for forwarding the first service message;
   forward a second service message to an end node indicated by the backup SID, wherein the second service message includes the destination address that is the backup SID, and the destination address is modified after determining that each of the end nodes on the primary path is an unreachable end node and the end node indicated by the backup SID is a reachable end node.

In a possible implementation, the SRH further include an SL, and the machine executable instructions further cause the processor to:
obtain a first SL according to a difference between a current SL and a fixed value, and acquire a first SID corresponding to the first SL from the SID list;
if an end node indicated by the first SID is unreachable, take the first SL as the current SL, and repeat a process of obtaining a first SL according to a difference between a current SL and a fixed value and acquiring a first SID corresponding to the first SL from the SID list until a first SID of a reachable end node is acquired from the SID list;
if the first SID of the reachable end node is the backup SID, modify the destination address to the backup SID to obtain a second service message;
if the first SID of the reachable end node is not the backup SID, modify the destination address to the first SID of the reachable end node to obtain a third service message, and forward the third service message to the end node indicated by the first SID.

In a possible implementation, the machine executable instructions further cause the processor to:
if the destination address is an SID configured with a specified additional behavior, delete the IPv6 header and the SRH to obtain a fourth service message;
forward the fourth service message.

In a possible implementation, the end node indicated by the backup SID is a tail node on a backup path for forwarding the first service message; or
the end node indicated by the backup SID is a second node, and there is a BE path between the first node and the second node.

In a possible implementation, an SID encapsulated in a penultimate element in the SID list is an SID of a tail node on the primary path, and an SID encapsulated in a last element is the backup SID.

In a possible implementation, when the electronic equipment is a source node, the machine executable instructions specifically cause the processor to:
receive a fifth service message;
if a next hop of a routing table entry matched with the fifth service message is an SRv6 strategy and the SRv6 strategy includes the primary path and the backup path, encapsulate the IPv6 header and the SRH in an outer layer of the fifth service message to obtain the first service message.

In a fourth aspect, an example of the disclosure provides a machine-readable storage medium which stores machine-executable instructions which, when called and executed by a processor, cause the processor to implement the method described in the first aspect above.

In a fifth aspect, an example of the disclosure provides a computer program product containing instructions that, when run on a computer, cause the computer to perform the method described in the first aspect above.

With the above technical solutions, after the first node acquires the first service message, in case that it is determined that each of the end nodes on the primary path is an unreachable end point and the end node indicated by the backup SID is a reachable end node, the second service message can be forwarded to the end node indicated by the backup SID. That is to say, in case that a node in the primary path fails or a link between the nodes fails, the first node on the primary path can forward the first service message to the end node indicated by the backup SID without a need to loss a packet first and then retransmit a service message by a backup path, which can reduce the service delay caused by node or link failures and improve the network reliability.

### BRIEF DESCRIPTION OF THE DRAWINGS

In order to more clearly describe the technical solutions of the examples of the disclosure and the prior art, accompanying drawings that need to be used in the examples and the prior art will be briefly described below. Obviously, accompanying drawings described below are for only some of examples of the disclosure. Those skilled in the art may also obtain other accompanying drawings based on these accompanying drawings without any creative efforts.
Fig. 1 is a schematic diagram of an SRv6 SID format;
Fig. 2 is a schematic diagram of an SRv6 message format;
Fig. 3 is an exemplary schematic diagram of an SRv6 message forwarding process;
Fig. 4 is a flowchart of a node protection method provided by an example of the disclosure;
Fig. 5 is a schematic diagram of an SRH format provided by an example of the disclosure;
Fig. 6 is a flowchart of another node protection method provided by an example of the disclosure;
Fig. 7 is a schematic diagram of an application scenario provided by the an example of the disclosure;
Fig. 8 is a schematic diagram of another application scenario provided by the an example of the disclosure;
Fig. 9 is a schematic structure diagram of a node protection device provided by an example of the disclosure; and
Fig. 10 is a schematic structure diagram of an electronic equipment provided by an example of the disclosure.

### DETAILED DESCRIPTION

In order to make the objective, technical solutions and advantages of the disclosure clearer and more understandable, the disclosure will be described in more detail below with reference to the accompanying drawings and examples. Obviously, the described examples are only some, and not all, of the examples of the disclosure. All other examples obtained based on the examples of the disclosure by those skilled in the art without any creative efforts fall into the scope of protection of the disclosure.

For the convenience of understanding, related concepts involved in the examples of the disclosure are explained.

### 1. Introduction of SRv6.

Segment Routing (SR) adopts a source node path selection mechanism, which encapsulates an SID (Segment Identifier) of a segment to be traversed by a forwarding path in a source node in advance. When a message passes through an SR node, the SR node forwards the message according to an SID of the message. Other nodes than a source node do not need to maintain a path state.

Segment Routing IPv6 (SRv6) refers to the implementation of SR based on an IPv6 forwarding plane. SRv6 can insert a routing extension header, namely, Segment Routing Header (SRH), into an IPv6 message, and add SIDs, namely an SID list, of all segments to be traversed by the forwarding path to the SRH, so as to explicitly specify the forwarding path of the IPv6 message. SRv6 provides a flexible and efficient control means for Software Defined Wide Area Network (SD-WAN), which has characteristics of simple deployment and easy expansion. It can better realize traffic scheduling and path optimization, thus guaranteeing critical service quality, balance traffic distribution, improving dedicated line utilization and reducing line cost.

According to different functions, nodes in an SRv6 network are classified into following roles:
Source node: responsible for inserting an SRH into an IPv6 header of an IPv6 message, or encapsulating an IPv6 header in an outer layer of a message and inserting an SRH. The source node is used to introduce a message flow into an SRv6 path defined by a Segment List in the SRH.
Transit node: located on the SRv6 path of the message. It does not participate in SRv6 processing, but only performs ordinary IPv6 message forwarding. The transit node can be a node that supports SRv6 or a node that does not support SRv6.
Endpoint node: if an IPv6 destination address of a received SRv6 message is an SRv6 SID configured on the Endpoint node, it will be processed according to instructions of the SRv6 SID, and the SRH will be updated. In subsequent examples, the Endpoint node will be referred to as an end node.
Tail node: the last Endpoint node of the SRv6 forwarding path.

The same node can play different roles in different SRv6 paths. For example, a node is a source node in one SRv6 path, and can be a transit node or an Endpoint node in other SRv6 paths.

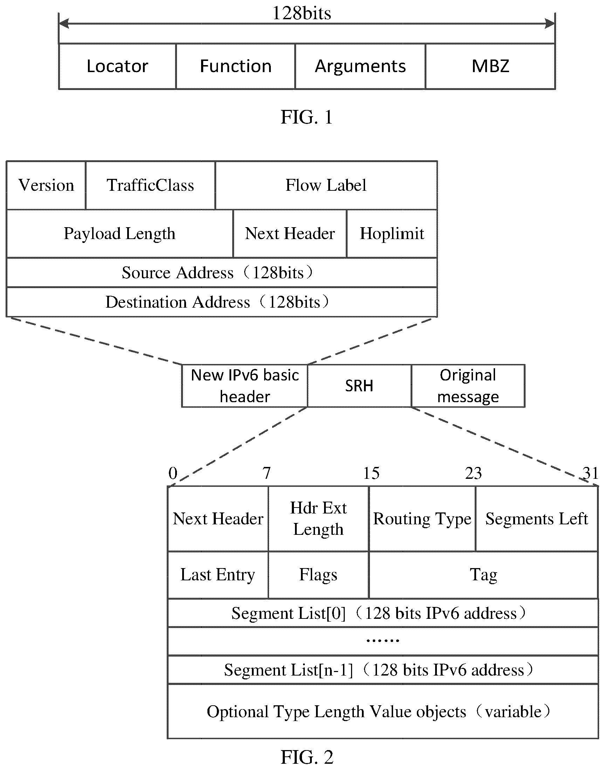

The SRv6 SID is used to define a certain network function and represent a certain network instruction. The format of SRv6 SID is in the form of IPv6 address. As shown in Fig. 1, the SRv6 SID consists of Locator, Function, Arguments and MBZ (Must be zero) fields.

Locator: used to identify a network segment to which the SID belongs. Locator is unique in SR domain.

Function: used to identify a local operation instruction bound with the SID. After receiving a traffic, a designated node in SR domain performs relevant operations according to the Function field of the SRv6 SID.
Arguments: used to define information such as flow and service of messages.
MBZ (Must be zero): when the sum of bits of Locator, Function and Arguments is less than 128bits, other bits are filled with 0.

### 2. SRv6 message format.

The SRv6 message encapsulation format is to add a new IPv6 header and an SRH to an outer layer of an original three-layer data message. The SRH is a routing extension header with a routing type of 4. The format of the SRv6 message is shown in Fig. 2. The SRv6 message includes an IPv6 header, an SRH and an original message.

The IPv6 header includes Version, Traffic class, Flow Label, Payload Length, Next header, Hop limit, Source Address (SA), Destination Address (DA). Lengths of the Source Address and Destination Address can both be 128bits. A value of the Next header is 43, indicating that the next header is the routing extension header.

The SRH includes:
Next Header with a length of 8bits, which is used to identify the type of the next message header.

Hdr Ext Length with a length of 8bits, which indicates the length of the SRH header in units of 8 bytes, excluding the first 8 bytes.

Routing Type with a length of 8bits and a value of 4, which indicates that the SRH is carried.

Segments Left (SL) with a length of 8bits, which indicates the serial number of the next SID to be searched. The initial value of Segments Left is n-1. n indicates the number of SIDs encapsulated in the SRH. The value of SL decreases by 1 every time an endpoint node is traversed.

Last Entry with a length of 8bits, the value of which is the serial number of the first SID of an actual forwarding path of a message in the SRH.

Flags with a length 8bits, which is flag information.

Tag with a length of 16bits, which is used to mark a group of messages with the same characteristics.

Segment List, which is an SID list, and is arranged according to the order of nodes on the message forwarding path from far to near. That is, Segment List [0] indicates the last SID of the forwarding path, Segment List [1] indicates the penultimate SID of the forwarding path, and so on. Because SID is in the format of an IPv6 address, each SID is an IPv6 address of 128 bits.

Optional Type Length Value objects (variable), which is optional type length value object variable.

### 3. SRv6 message forwarding process.

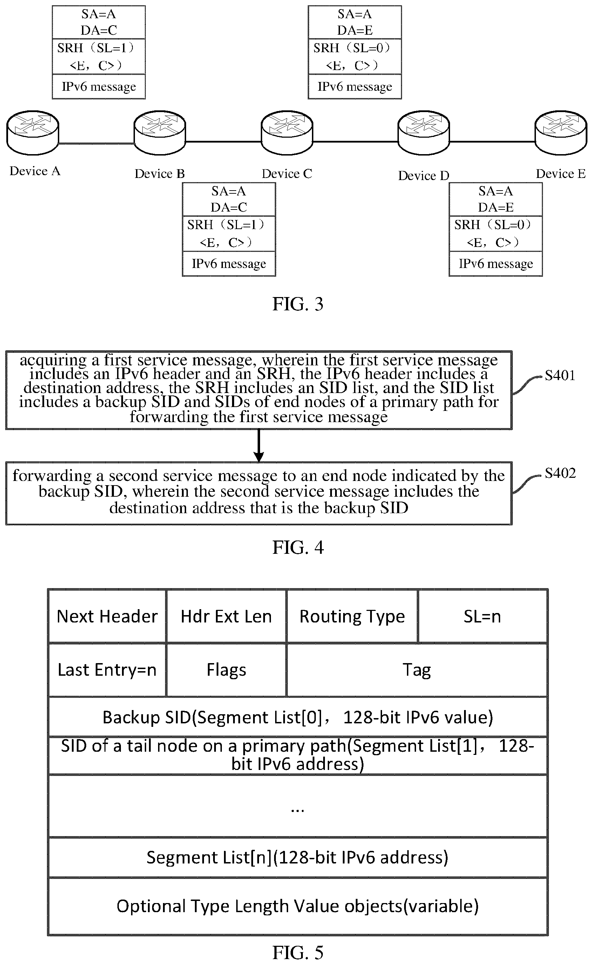

As shown in Fig. 3, device A is the source node, device C and device E are the Endpoint nodes, and device B and device D are the transit nodes.

Block 1: After receiving an IPv6 message, device A as a source node encapsulates an SRH and an IPv6 header into the IPv6 message, and then looks up a routing table according to a destination address in the encapsulated IPv6 header, so as to forward the encapsulated message to device B.

A path from device A to device D needs to pass through two Endpoint nodes, i.e., device C and device E. Therefore, SL in the SRH is equal to 1, and the SID list encapsulated in the SRH includes Segment List [0]=E and Segment List [1] = C.

The source address in the IPv6 header is the address of device A, and the destination address is the address indicated by SL, i.e., the address of Segment List [1] indicated by SL=1, which is the address of device C.

Block 2: After receiving the message, device B looks up the routing table according to the destination address in the IPv6 header, and forwards the message to device C.

Block 3: Device C checks the SL in the SRH. If SL>0, the SL value is decreased by 1. The destination address in the IPv6 header is updated to the address indicated by SL, i.e., Segment List [0] corresponding to SL=0, which is the address of device E. Then device C forwards the message to device D.

Block 4: After receiving the message, device D looks up the routing table according to the destination address in the IPv6 header, and forwards the message to device E.

Block 5: Device E, as the tail node, receives the message and checks a value of SL in the SRH header. If it is found that SL=0, Device E decapsulates the message and deletes the encapsulated IPv6 header and the SRH, and forwards the message according to the destination address of the original message.

In order to reduce a service delay when a link or node fails, an example of the present disclosure provides a node protection method, which is applied to a first node, wherein the first node may be an end node on an SRv6 TE path, as shown in Fig. 4. The method includes:
S401: acquiring a first service message, wherein the first service message includes an IPv6 header and an SRH, the IPv6 header includes a destination address, the SRH includes an SID list, and the SID list includes a backup SID and SIDs of end nodes of a primary path for forwarding the first service message.
S402: forwarding a second service message to an end node indicated by the backup SID, wherein the second service message includes the destination address that is the backup SID.

The destination address is modified after determining that each of the end nodes on the primary path is unreachable and the end node indicated by the backup SID is reachable.

The first node can sequentially determine whether each of end nodes in the SID list is reachable after receiving the first service message. If it is determined that each of the end nodes on the primary path is unreachable and the end node indicated by the backup SID is reachable, the destination address in the IPv6 header of the first node can be modified to the backup SID, thus obtaining the second service message and forwarding the second service message.

With this method, after the first node acquires the first service message, in case that it is determined that each of the end nodes on the primary path is an unreachable end node and the end node indicated by the backup SID is a reachable end node, the second service message can be forwarded to the end node indicated by the backup SID. That is to say, in case that a node in the primary path fails or a link between the nodes fails, the first node on the primary path can forward the first service message to the end node indicated by the backup SID without a need to loss a packet first and then retransmit a service message by a backup path, which can reduce the service delay caused by node or link failures and improve the network reliability.

In an example of the disclosure, the SID encapsulated in the penultimate element in the SID list is the SID of a tail node on the primary path, and the SID encapsulated in the last element is the backup SID.

As shown in Fig. 5, in the SRH of an example of the disclosure, the SID of the tail node on the primary path is encapsulated at a location of the penultimate element in the SID list, i.e., Segment List[1]. The backup SID is encapsulated at a location of the last element, i.e., Segment List[0]. An initial value of SL is n, and Last Entry = n. For the introduction of other fields included in Fig. 5, please refer to the introduction of the SRH in Fig. 2 in the above example.

In the relevant art, the SRH includes the SID of the end node of the primary path. An example of the disclosure adds the backup SID on this basis. It can be seen that the example of the disclosure only involves a change of a data forwarding plane, and a routing protocol of a control plane is not extended, so the implementation is relatively simple, and the impact on existing SRv6 networks is small.

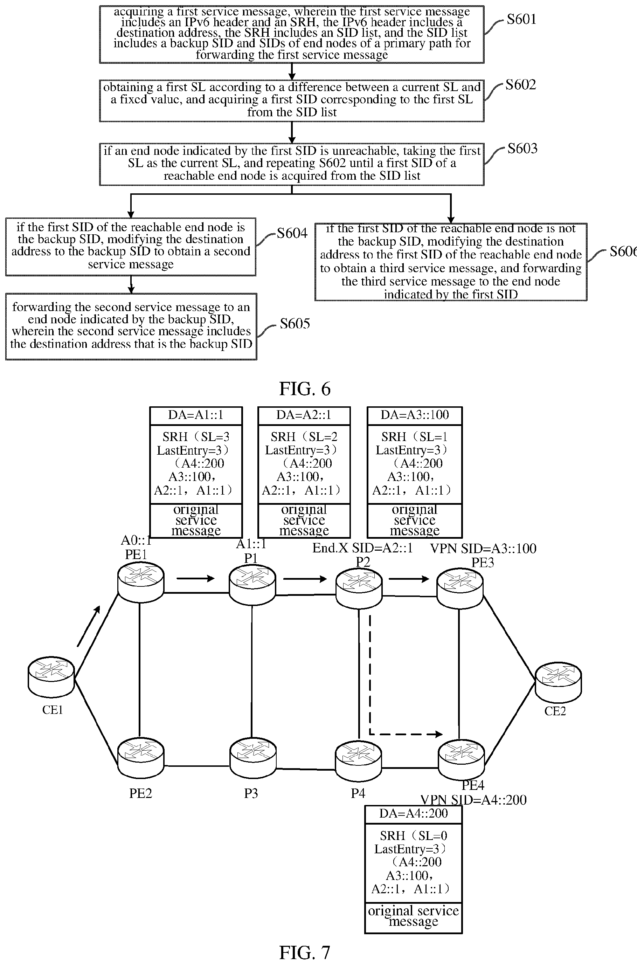

In some examples of the disclosure, the SRH further includes the SL, as shown in FIG. 6. The method includes:
S601: acquiring a first service message, wherein the first service message includes an IPv6 header and an SRH, the IPv6 header includes a destination address, the SRH includes an SID list, and the SID list includes a backup SID and SIDs of end nodes of a primary path for forwarding the first service message.
S601 is the same as S401.
S602: obtaining a first SL according to a difference between a current SL and a fixed value, and acquiring a first SID corresponding to the first SL from the SID list.

For example, if the first SL=3, the first SID corresponding to the first SL is SID3 encapsulated at a location of Segment List[3] in the SRH.

S603: if an end node indicated by the first SID is unreachable, taking the first SL as the current SL, and repeating S602 until a first SID of a reachable end node is acquired from the SID list.

For example, if an end node indicated by SID3 is unreachable, SL=3 is taken as the current SL, and SID2 encapsulated at a location of Segment List[2] corresponding to SL=2 is acquired from the SID list.

If an end node indicated by SID2 is still unreachable, SID1 encapsulated at a location of Segment List[1] corresponding to SL=1 is acquired from the SID list.

If an end node indicated by SID1 is still unreachable, SID0 encapsulated at a location of Segment List[0] corresponding to SL=0 is acquired from the SID list.

The above process can be stopped when the first SID of the reachable end node is acquired.

When the first SID of the reachable end node is acquired, the first node can modify the destination address of the first service message to the first SID, and then forward the first service message to the end node indicated by the first SID. The first SID may be the backup SID or the SID of the end node of the primary path. If the first SID is the backup SID, S604 is executed; otherwise, S606 is executed.

S604: if the first SID of the reachable end node is the backup SID, modifying the destination address to the backup SID to obtain a second service message.

According to provisions of SRv6 related protocols, the SL in the SRH also needs to be updated to a value pointing to the backup SID, that is, SL in the SRH of the second service message is equal to 0.

Combined with an example in S603, if it is finally determined that an end node corresponding to the SID encapsulated at the location of Segment List[0] is reachable, the first SID can be determined as the backup SID, and thus the destination address in the IPv6 header of the first service message can be modified to the backup SID and the value of SL can be updated to 0, so as to obtain the second service message.

S605: forwarding the second service message to an end node indicated by the backup SID, wherein the second service message includes the destination address that is the backup SID.

S605 is the same as S402.

S606: If the first SID of the reachable end node is not the backup SID, modifying the destination address to the first SID of the reachable end node to obtain a third service message, and forwarding the third service message to the end node indicated by the first SID.

According to the provisions of SRv6 related protocols, the SL in the SRH also needs to be updated to a value pointing to the first SID, that is, the SL in the SRH of the third service message indicates the Segment List encapsulated with the first SID.

For example, in combination with the example in S603, if the first SID of the reachable end node is SID1, the destination address in the IPv6 header of the first service message can be modified to SID1 and the value of SL can be updated to 1 to obtain the third service message, and the third service message can be forwarded.

With this method, when the first node determines that a next hop end node is unreachable, it can be determined that whether subsequent end nodes are reachable hop by hop based on the SID list until a first SID of the reachable end node is acquired. Then the first service message can be modified based on the first SID of the reachable end node, and the modified service message can be forwarded to the reachable end node. When the reachable end node is not the backup SID, that is, when some of the end nodes on the primary path fail or some of links fail, the first node can skip the failed end nodes or links and forward the service message to the reachable end node, so that the service message can be forwarded in time. In case that the reachable end node is the backup SID, the first node can forward the modified service message to the end node indicated by the backup SID, which enables fast path switching under the condition of a primary path failure, and also enables the service message to be forwarded in time, thus avoiding a long service delay and improving the reliability of the SRv6 network.

In some examples of the disclosure, the first node may be the tail node on the primary path. The SID of the tail node on the primary path is configured with a specified additional behavior (Flavor).

As an example, the specified additional behavior can be called Penultimate Segment Decapsulation (PSD) Flavor. The specified additional behavior is used to define a decapsulation behavior of the penultimate hop end node, which means removing the outer encapsulation of the service message and forwarding the inner original message.

After the first node acquires the first service message, if it is determined that the destination address is the SID configured with the specified additional behavior locally, the IPv6 header and SRH is deleted to obtain a fourth service message and the fourth service message is forwarded.

It can be understood that the original service message encapsulated in the inner layer, i.e., the fourth service message, can be obtained after the IPv6 header and SRH of the first service message is deleted. Then the first node can forward the fourth service message based on the routing table.

In this case, the SL of the first service message received by the first node is equal to 1, and the destination address is the same as the SID encapsulated at the location of Segment List[1] in the SRH. If the first node receives the first service message, which indicates that there is no fault in the primary path, the first node as the tail node can decapsulate the first service message for further transmission without additionally forwarding it to the backup node indicated by Segment List[0] in the SID list according to the SID lit, such that the original service message encapsulated in the first service message can be forwarded to the destination address of the original service message as soon as possible.

In an example of the disclosure, in case that the first node is an intermediate end node or the tail node on the primary path, the first node acquires the first service message by receiving the first service message sent by a third node which is the previous hop node of the first node on the primary path.

When the first node is the source node, the first node acquires the first message by receiving a fifth service message, and then if a next hop of a routing table entry matched by the fifth service message is an SRv6 strategy, and the SRv6 strategy includes the primary path and the backup path, the IPv6 header and SRH are encapsulated in the outer layer of the fifth service message to obtain the first service message.

The source node can learn routing information of each node in SRv6 network, and then determine an optimal path and a suboptimal path according to a routing optimization strategy. The optimal path can be taken as the primary path, and the suboptimal path can be taken as the backup path. The tail node of the suboptimal path can be taken as the backup node.

The source node can encapsulate the IPv6 header and SRH in the outer layer of the fifth service message. At this time, the source address of the IPv6 header is an address of the source node, and the destination address is an address of an end node in a next hop of the source node in the SID list of the primary path. It is assumed that the SID list corresponding to the primary path includes n SIDs, a value of the SL in the SRH is n, Segment List[n] to Segment List[1] in the SRH are n SIDs in this SID list, and Segment List[0] in the SRH is the SID of the tail node of the backup path. At this time, the format of the SRH in the first service message can be seen in Fig. 5.

In the above example, the end node indicated by the backup SID is the tail node on the backup path for forwarding the first service message.

The node protection method provided by the example of the disclosure is described with a following specific scenario.

As shown in Fig. 7, there are two SRv6 TE forwarding paths between Customer Edge (CE) 1 and CE2 in Fig. 7, in which PE1-->P1-->P2-->PE3 is the primary path, PE1 is the source node, P1 and P2 are the intermediate nodes, and PE3 is the tail node.

PE2-->P3-->P4-->PE4 is the backup path, PE2 is the source node, P3 and P4 are the intermediate nodes, and PE4 is the tail node.

It is assumed that Locator of PE1 is A0::1, Locator of P1 is A1::1. End.X SID of P2 is A2::1. Locator of PE3 is A3::1 and VPN SID of PE3 is A3::100. This VPN SID A3::100 has PSD additional behavior. Locator prefix of PE4 is A4::1/64 and VPN SID of PE4 is A4::200.

It should be noted that Fig. 7 is an example of a scenario, and nodes on the primary path and backup path shown in Fig. 7 are end nodes. In actual implementation, there may also be transit nodes on the primary path and backup path.

Each of the end nodes in Fig. 7 can issue routes by flooding, so as to inform other end nodes of its SID. The source node PE1 can learn the dual-homing route to CE2, and then can determine the primary path and backup path to CE2 according to the route optimization strategy, with the tail node on the primary path as a primary tail node and the tail node on the backup path as a backup tail node. In a normal case, a traffic from CE1 to CE2 is forwarded along the primary path PE1-->P1-->P2-->PE3, where the primary tail node is PE3, the backup tail node is PE4, and the backup SID of PE3 is the VPN SID of PE4 A4::200.

When PE1 receives a message from CE1 to CE2, a process of forwarding the message is as follows.

Block 1: PE1 determine that the message from CE1 to CE2 needs to be forwarded through a path PE1-->P1-->P2-->PE3, wherein PE1 can add an IPv6 header and an SRH to the message.

The destination address of the IPv6 header is the SID of P1, i.e., A1::1. Segment list in the SRH is <A1::1, A2::1, A3::100, A4::200 >. That is, a location of Segment List[3] is A1::1 of P1, a location of Segment List[2] is A2::1 of P2, a location of Segment List[1] is A4::100 of PE3, and a location of Segment List[0] is A4::200 of PE4, SL=3.
Block 2: PE1 forwards the message to P1 according to A1::1.
Block 3: P1 forwards the message to P2 according to a next Segment List A2::1.
Block 4: when P2 receives the message with the destination address of END.X SID A2::1, P2 can forward the message on a link between P2 and PE3 according to the END.X SID A2::1. At this time, the destination address of the message is VPN SID A3:: 100 of PE3.
Block 5: after receiving the message with the destination address of VPN SID A3::100, PE3 determines that the VPN SID A3::100 has the PSD additional behavior, and determines that the local node is the penultimate hop node according to SL, then performs the Penultimate Segment Decapsulation and table lookup forwarding processing to delete the IPv6 header and SRH and forward the inner original service message to CE2.

The above blocks 1- 5 are the message forwarding process when there is no fault in the primary path.

In case of a failure of PE3, blocks 4 and 5 can be replaced by following blocks.

When P2 receives a message with the destination address of END.X SID A2::1, P2 first decreases SL in the message by 1, and then SL becomes 1. P2 then acquires a next Segment List [1], i.e., the SID of PE3, from the Segment List according to SL=1. The forwarding table of Forward Information dataBase (FIB) is looked up according to the SID of Segment List[1]. If it is found that the route to PE3 is unreachable, the following processes are performed in sequence:
decreasing SL by 1, that is, the current SL becomes 0;
modifying the destination address in the IPv6 header of the message to Segment List[0] pointed by the current SL, i.e., A4:: 200 of PE4;
looking up the forwarding table of FIB by using a new destination address, and acquiring an out interface and next hop information;
forwarding the message to PE4 according to the out interface and next hop information;
then, if PE4 determines that SL=0 and the destination address is VPN SID of PE4 after receiving the message, deleting the IPv6 header and SRH of the message and forwarding the inner original service message to CE2.

In addition, in case of a failure of the intermediate node, assumed a failure of P2, blocks 3 to 5 can be replaced by following blocks.

When P1 receives a message with the destination address of A1::1, P1 first decreases SL in the message by 1, and then SL becomes 2. P1 then acquires a next Segment List[2], i.e., the SID of P2, from the Segment List according to SL=2. The forwarding table of FIB is looked up according to the SID of Segment List[2]. If it is found that the route to P2 is unreachable, the following processes are performed in sequence:
decreasing SL by 1, that is, the current SL becomes 1;
looking up the forwarding table of FIB by using Segment List[1] pointed by the current SL=1 (i.e. the SID of PE3);
if it is determined that the route to PE3 is unreachable, decreasing SL by 1 again, that is, the current SL becomes 0;
looking up the forwarding table of FIB by using Segment List[0] pointed by the current SL=0 (that is, the SID of PE4), and if it is determined that the route to PE4 is reachable, modifying the destination address in the IPv6 header of the message to the SID of PE4, i.e., A4:: 200;
then, looking up the forwarding table of FIB by using a new destination address, and acquiring an out interface and next hop information;
forwarding the message to PE4 according to the out interface and next hop information;
then, if PE4 determines that SL=0 and the destination address is VPN SID of PE4 after receiving the message, deleting the IPv6 header and SRH of the message and forwarding the inner original service message to CE2, so that the original service message enters a VPN private network where CE2 is located.

It can be seen that whether the tail node fails or the intermediate node fails, fast path switching can be realized, so that the message can be forwarded to the reachable end node, and the network performance of SRv6 can be improved.

In another scenario of an example of the disclosure, an escape function after a failure of a critical forwarding path of SRv6 can also be realized.

If the source node determines that a next hop of the routing table entry matched with the destination address of the fifth service message is an SRv6 strategy after receiving the fifth service message, it is also necessary to determine whether the tail node of the primary path included in the SRv6 strategy has a backup node. In this scenario, the backup node can be an escape device.

Accordingly, in the above example, the end node indicated by the backup SID included in the SID list is the second node, and there is a Best-effort (BE) path between the first node and the second node. The second node can also be called the escape device. That is, when a node in the primary path fails, the message can be forwarded through the escape device.

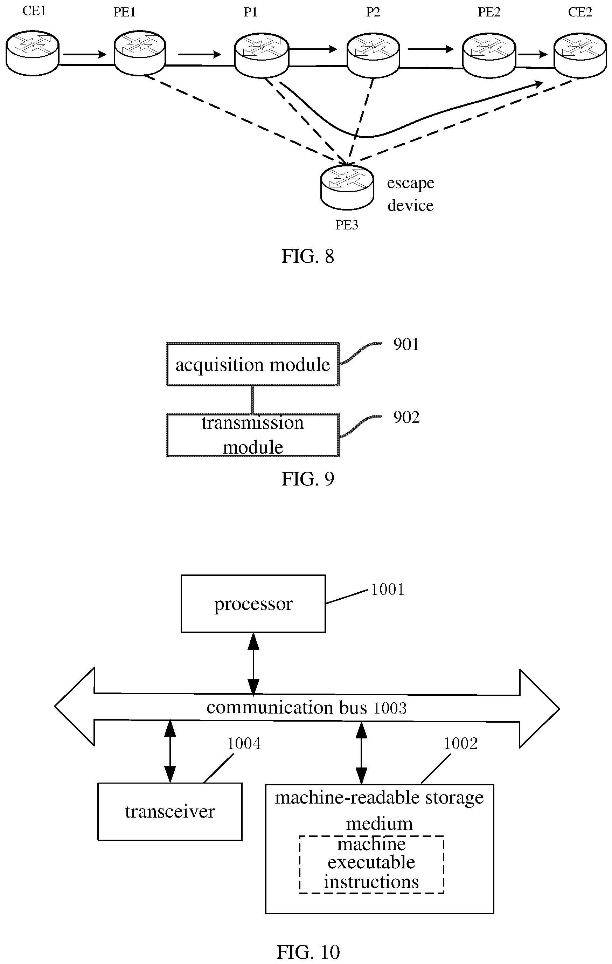

As shown in Fig. 8, which is an example of this scenario, there is a forwarding path PE1-->P1-->P2-->PE2 within an IPv6 bearer network between CE1 and CE2, with PE1 as the source node, P1 and P2 as intermediate nodes, and PE2 as the tail node. The SID of PE2 has PSD Flavor.

The IPv6 bearer network is also equipped with a public escape device PE3, and there are BE paths between PE1, P1, P2 and PE3. The BE paths can be used as backup paths.

When PE1 receives a message from CE1 to CE2, the IPv6 header and SRH can be added to the message.

The destination address of the IPv6 header is the SID of P1. The location of Segment List[3] in the SRH is the SID of P1, the location of Segment List[2] is the SID of P2, the location of Segment List[1] is the SID of PE2, and the location of Segment List[0] is the SID of PE3.

In a normal case, this message is forwarded through PE1-->P1-->P2-->PE2. If PE2 determines that the destination address of this message is the SID of PE2 and the SID is configured with PSD Flavor after receiving this message, the IPv6 header and SRH of this message are deleted, and the inner original service message is sent to CE2.

In case that there is a failure between PE1 and PE2, such as a failure of P2, after P1 receives the message, if it is determined that both P2 and PE2 are unreachable, the destination address of the message can be modified to the SID of PE3, SL is updated to 0, and the modified message is forwarded to PE3 based on the BE path.

After PE3 receives the message, if it is determined that the destination address is the SID of PE3 and SL=0, the IPv6 header and SRH of the message can be deleted, and the inner original service message is forwarded to CE2.

With the above method, in case that the message does not have a backup SRv6 TE forwarding path, the message can also be forwarded to the escape device based on a BE forwarding mode, and the escape device forwards the message to CE, which further reduces the service delay in case of node or link failures and improves the reliability of SRv6 network.

Corresponding to the above method example, the example of the disclosure also provides a node protection device, which is applied to the first node. As shown in Fig. 9, the device includes:
an acquisition module 901 to acquire a first service message, wherein the first service message includes an IPv6 header and an SRH, the IPv6 header includes a destination address, the SRH includes an SID list, and the SID list includes a backup SID and SIDs of end nodes of a primary path for forwarding the first service message;
a transmission module 902 to forward a second service message to an end node indicated by the backup SID, wherein the second service message includes the destination address that is the backup SID, and the destination address is modified after determining that each of the end nodes on the primary path is an unreachable end node and the end node indicated by the backup SID is a reachable end node.

In an implementation, the SRH further includes an SL. The device further includes a modification module.

The acquisition module 901 is further to obtain a first SL according to a difference between a current SL and a fixed value, and acquire a first SID corresponding to the first SL from the SID list; if an end node indicated by the first SID is unreachable, take the first SL as the current SL, and repeat a process of obtaining a first SL according to a difference between a current SL and a fixed value and acquiring a first SID corresponding to the first SL from the SID list until a first SID of a reachable end node is acquired from the SID list;

The modification module is to modify, if the first SID of the reachable end node is the backup SID, the destination address to the backup SID to obtain the second service message;

The modification module is further to modify, if the first SID of the reachable end node is not the backup SID, the destination address to the first SID of the reachable end node to obtain a third service message;

The transmission module 902 is further to forward the third service message to the end node indicated by the first SID.

In an implementation, the device further includes:
a deletion module to delete, if the destination address is an SID configured with a specified additional behavior, the IPv6 header and the SRH to obtain a fourth service message;
the transmission module 902 is further to forward the fourth service message.

In an implementation, the end node indicated by the backup SID is a tail node on a backup path for forwarding the first service message; or
the end node indicated by the backup SID is a second node, and there is a BE path between the first node and the second node.

In an implementation, an SID encapsulated in a penultimate element in the SID list is an SID of a tail node on the primary path, and an SID encapsulated in a last element is the backup SID.

In an implementation, when the first node is a source node, the acquisition module 901 is specifically to:
receive a fifth service message;
if a next hop of a routing table entry matched with the fifth service message is an SRv6 strategy and the SRv6 strategy includes the primary path and the backup path, encapsulate the IPv6 header and the SRH in an outer layer of the fifth service message to obtain the first service message.

Corresponding to the above method example, an example of the disclosure also provides an electronic equipment, which may be a first node. As shown in Fig. 10, the electronic equipment includes:
a processor 1001, a machine-readable storage medium 1002 and a transceiver 1004. The machine-readable storage medium 1002 stores machine-executable instructions that can be executed by the processor 1001 and the machine executable instructions cause the processor 1001 to:
acquire a first service message, wherein the first service message includes an IPv6 header and an SRH, the IPv6 header includes a destination address, the SRH includes an SID list, and the SID list includes a backup SID and SIDs of end nodes of a primary path for forwarding the first service message;
forward a second service message to an end node indicated by the backup SID, wherein the second service message includes the destination address that is the backup SID, and the destination address is modified after determining that each of the end nodes on the primary path is an unreachable end node and the end node indicated by the backup SID is a reachable end node.

In an implementation, the SRH further includes an SL; the machine executable instructions cause the processor 1001 to:
obtain a first SL according to a difference between a current SL and a fixed value, and acquire a first SID corresponding to the first SL from the SID list;
if an end node indicated by the first SID is unreachable, take the first SL as the current SL, and repeat a process of obtaining a first SL according to a difference between a current SL and a fixed value and acquiring a first SID corresponding to the first SL from the SID list until a first SID of a reachable end node is acquired from the SID list;
if the first SID of the reachable end node is the backup SID, modify the destination address to the backup SID to obtain a second service message;
if the first SID of the reachable end node is not the backup SID, modify the destination address to the first SID of the reachable end node to obtain a third service message, and forward the third service message to the end node indicated by the first SID.

In an implementation, the machine executable instructions cause the processor 1001 to:
if the destination address is an SID configured with a specified additional behavior, delete the IPv6 header and the SRH to obtain a fourth service message;
forward the fourth service message.

In an implementation, the end node indicated by the backup SID is a tail node on a backup path for forwarding the first service message; or
the end node indicated by the backup SID is a second node, and there is a BE path between the first node and the second node.

In an implementation, an SID encapsulated in a penultimate element in the SID list is an SID of a tail node on the primary path, and an SID encapsulated in a last element is the backup SID.

In an implementation, when the electronic equipment is a source node, the machine executable instructions cause the processor 1001 to:
receive a fifth service message;
if a next hop of a routing table entry matched with the fifth service message is an SRv6 strategy and the SRv6 strategy includes the primary path and the backup path, encapsulate the IPv6 header and the SRH in an outer layer of the fifth service message to obtain the first service message.

As shown in Fig. 10, the electronic equipment may further include a communication bus 1003. The processor 1001, the machine-readable storage medium 1002 and the transceiver 1004 communicate with each other through the communication bus 1003, which may be a Peripheral Component Interconnect (PCI) bus or an Extended Industry Standard Architecture (EISA) bus. The communication bus 1003 can be divided into address bus, data bus, control bus, etc.

The transceiver 1004 can be a wireless communication module. The transceiver 1004 performs data interaction with other devices under the control of the processor 1001.

The machine-readable storage medium 1002 may include a Random Access Memory (RAM) or a Non-Volatile Memory (NVM), such as at least one disk memory. In addition, the machine-readable storage medium 1002 can also be at least one storage device located far away from the aforementioned processor.

The processor 1001 may be a general-purpose processor, including a Central Processing Unit (CPU), a Network Processor (NP), etc. The processor 1001 can also be Digital Signal Processing (DSP), Application Specific Integrated Circuit (ASIC), Field-Programmable Gate Array (FPGA) or other programmable logic devices, discrete gate or transistor logic devices, and discrete hardware components.

Based on the same inventive concept, an example of the disclosure also provides a machine-readable storage medium, which stores machine-executable instructions that can be executed by a processor. The machine executable instructions when executed cause the processor to implement blocks of any of the above node protection methods.

In yet another example provided by the disclosure, there is also provided a computer program product containing instructions, which, when run on a computer, cause the computer to execute blocks of any of the node protection methods in above examples.

It should be noted that, relational terms such as first and second and the like herein are only used to distinguish one entity or operation from another and do not necessarily require or imply any such actual relationship or order between these entities or operations. Moreover, the terms "comprising", "including" or any other variations thereof are intended to encompass a non-exclusive inclusion such that a process, method, article or device that includes a series of elements includes not only those elements, but also includes other elements not explicitly listed or other elements inherent to such a process, method, article or apparatus. Without further limitation, elements defined by the phrase "comprising one..." do not preclude the presence of additional identical elements in a process, method, article or device that includes the mentioned elements.

The various examples in this specification are described in a related manner. Each example focuses on the differences from other examples, and the same and similar parts between the various examples can be referred to each other, especially for the segment identification determination device, apparatus and machine-readable storage medium. For the example of the machine-readable storage medium, the description is relatively simple because it is basically similar to the example of the segment identification determination method, and the relevant points can be referred to the partial description of the example of the segment identification determination method.

The above descriptions are only preferred examples of the disclosure, and are not intended to limit the disclosure. Any modifications, equivalent replacements, improvements and the like made within the spirit and principles of the disclosure shall be included within the scope of protection of the disclosure.

## Claims

1. A node protection method, which is applied to a first node, comprising:
acquiring a first service message, wherein the first service message comprises an IPv6 header and an SRH, the IPv6 header comprises a destination address, the SRH comprises an SID list, and the SID list comprises a backup SID and SIDs of end nodes of a primary path for forwarding the first service message;
forwarding a second service message to an end node indicated by the backup SID, wherein the second service message comprises the destination address that is the backup SID, and the destination address is modified after determining that each of the end nodes on the primary path is an unreachable end node and the end node indicated by the backup SID is a reachable end node.

2. The method according to claim 1, wherein the SRH further comprises an SL; after acquiring the first service message, the method further comprises:
obtaining a first SL according to a difference between a current SL and a fixed value, and acquiring a first SID corresponding to the first SL from the SID list;
if an end node indicated by the first SID is unreachable, taking the first SL as the current SL, and repeating a process of obtaining a first SL according to a difference between a current SL and a fixed value and acquiring a first SID corresponding to the first SL from the SID list until a first SID of a reachable end node is acquired from the SID list;
if the first SID of the reachable end node is the backup SID, modifying the destination address to the backup SID to obtain the second service message;
if the first SID of the reachable end node is not the backup SID, modifying the destination address to the first SID of the reachable end node to obtain a third service message, and forwarding the third service message to the end node indicated by the first SID.

3. The method according to claim 1, wherein after acquiring the first service message, the method further comprises:
if the destination address is an SID configured with a specified additional behavior, deleting the IPv6 header and the SRH to obtain a fourth service message;
forwarding the fourth service message.

4. The method according to any one of claims 1 to 3, wherein
the end node indicated by the backup SID is a tail node on a backup path for forwarding the first service message; or
the end node indicated by the backup SID is a second node, and there is a BE path between the first node and the second node.

5. The method according to any one of claims 1 to 3, wherein
an SID encapsulated in a penultimate element in the SID list is an SID of a tail node on the primary path, and an SID encapsulated in a last element is the backup SID.

6. The method according to claim 1, wherein when the first node is a source node, acquiring the first service message comprises:
receiving a fifth service message;
if a next hop of a routing table entry matched with the fifth service message is an SRv6 strategy and the SRv6 strategy comprises the primary path and the backup path, encapsulating the IPv6 header and the SRH in an outer layer of the fifth service message to obtain the first service message.

7. A node protection device, which is applied to a first node, comprising:
an acquisition module to acquire a first service message, wherein the first service message comprises an IPv6 header and an SRH, the IPv6 header comprises a destination address, the SRH comprises an SID list, and the SID list comprises a backup SID and SIDs of end nodes of a primary path for forwarding the first service message;
a transmission module to forward a second service message to an end node indicated by the backup SID, wherein the second service message comprises the destination address that is the backup SID, and the destination address is modified after determining that each of the end nodes on the primary path is an unreachable end node and the end node indicated by the backup SID is a reachable end node.

8. The device according to claim 7, wherein the SRH further comprises an SL, and the device further comprises a modification module;
the acquisition module is further to obtain a first SL according to a difference between a current SL and a fixed value, and acquire a first SID corresponding to the first SL from the SID list; if an end node indicated by the first SID is unreachable, take the first SL as the current SL, and repeat a process of obtaining a first SL according to a difference between a current SL and a fixed value and acquiring a first SID corresponding to the first SL from the SID list until a first SID of a reachable end node is acquired from the SID list;
the modification module is to modify, if the first SID of the reachable end node is the backup SID, the destination address to the backup SID to obtain the second service message;
the modification module is further to modify, if the first SID of the reachable end node is not the backup SID, the destination address to the first SID of the reachable end node to obtain a third service message;
the transmission module is further to forward the third service message to the end node indicated by the first SID.

9. The device according to claim 7, wherein the device further comprises:
a deletion module to delete, if the destination address is an SID configured with a specified additional behavior, the IPv6 header and the SRH to obtain a fourth service message;
the transmission module is further to forward the fourth service message.

10. The device according to any one of claims 7 to 9, wherein
the end node indicated by the backup SID is a tail node on a backup path for forwarding the first service message; or
the end node indicated by the backup SID is a second node, and there is a BE path between the first node and the second node.

11. The device according to any one of claims 7 to 9, wherein
an SID encapsulated in a penultimate element in the SID list is an SID of a tail node on the primary path, and an SID encapsulated in a last element is the backup SID.

12. The device according to claim 7, wherein when the first node is a source node, the acquisition module is specifically to:
receive a fifth service message;
if a next hop of a routing table entry matched with the fifth service message is an SRv6 strategy and the SRv6 strategy comprises the primary path and the backup path, encapsulate the IPv6 header and the SRH in an outer layer of the fifth service message to obtain the first service message.

13. An electronic equipment, comprising:
a processor;
a transceiver;
a machine-readable storage medium which stores machine-executable instructions that can be executed by the processor, the machine executable instructions cause the processor to:
acquire a first service message, wherein the first service message comprises an IPv6 header and an SRH, the IPv6 header comprises a destination address, the SRH comprises an SID list, and the SID list comprises a backup SID and SIDs of end nodes of a primary path for forwarding the first service message;
forward a second service message to an end node indicated by the backup SID, wherein the second service message comprises the destination address that is the backup SID, and the destination address is modified after determining that each of the end nodes on the primary path is an unreachable end node and the end node indicated by the backup SID is a reachable end node.

14. The electronic equipment according to claim 13, wherein the SRH further comprises an SL, and the machine executable instructions further cause the processor to:
obtain a first SL according to a difference between a current SL and a fixed value, and acquire a first SID corresponding to the first SL from the SID list;
if an end node indicated by the first SID is unreachable, take the first SL as the current SL, and repeat a process of obtaining a first SL according to a difference between a current SL and a fixed value and acquiring a first SID corresponding to the first SL from the SID list until a first SID of a reachable end node is acquired from the SID list;
if the first SID of the reachable end node is the backup SID, modify the destination address to the backup SID to obtain a second service message;
if the first SID of the reachable end node is not the backup SID, modify the destination address to the first SID of the reachable end node to obtain a third service message, and forward the third service message to the end node indicated by the first SID.

15. The electronic equipment according to claim 13, wherein the machine executable instructions further cause the processor to:
if the destination address is an SID configured with a specified additional behavior, delete the IPv6 header and the SRH to obtain a fourth service message;
forward the fourth service message.

16. The electronic equipment according to any one of claims 13 to 15, wherein
the end node indicated by the backup SID is a tail node on a backup path for forwarding the first service message; or
the end node indicated by the backup SID is a second node, and there is a BE path between the first node and the second node.

17. The electronic equipment according to any one of claims 13 to 15, wherein
an SID encapsulated in a penultimate element in the SID list is an SID of a tail node on the primary path, and an SID encapsulated in a last element is the backup SID.

18. The electronic equipment according to claim 13, wherein when the electronic equipment is a source node, the machine executable instructions specifically cause the processor to:
receive a fifth service message;
if a next hop of a routing table entry matched with the fifth service message is an SRv6 strategy and the SRv6 strategy comprises the primary path and the backup path, encapsulate the IPv6 header and the SRH in an outer layer of the fifth service message to obtain the first service message.

19. A machine-readable storage medium, which stores machine executable instructions which, when called and executed by a processor, cause the processor to implement blocks of the method according to any one of claims 1-6.
